# EUROPÄISCHE PATENTSCHRIFT

(11) **EP 2 630 352 B1**
(45) Veröffentlichungstag und Bekanntmachung des Hinweises auf die Patenterteilung: **10.12.2014**
(21) Anmeldenummer: 11770364.5
(22) Anmeldetag: 11.10.2011
(51) Int. Cl.: F02B 37/18

(54) **BETÄTIGUNGSVORRICHTUNG FÜR EINE ABGASKLAPPE**
CONNECTING ROD FOR AN EXHAUST GAS VALVE
TIGE DE TRANSMISSION POUR UN CLAPET DE GAZ D'ECHAPPEMENT

(30) Priorität: 23.10.2010 DE 102010049466
(43) Veröffentlichungstag der Anmeldung: 28.08.2013
(73) Patentinhaber: Audi AG, 85045 Ingolstadt (DE); SCHERDEL INNOTEC Forschungs- und Entwicklungs-GmbH, 95615 Marktredwitz (DE)
(72) Erfinder: HINKELMANN, Achim Hans, 85049 Ingolstadt (DE); STANEFF, Michael-Stefan, 85080 Gaimersheim (DE); SEIDEL, Rüdiger, 01277 Dresden (DE)
(86) Internationale Anmeldenummer: PCT/EP2011/005070
(87) Internationale Veröffentlichungsnummer: WO 2012/052124

(56) Entgegenhaltungen:
- EP-A2- 1 256 703
- FR-A1- 2 823 795

## Beschreibung

Die Erfindung betrifft eine Betätigungsvorrichtung für eine Abgasklappe einer Ladedrucksteuerung von turboaufgeladenen Brennkraftmaschinen gemäß dem Oberbegriff des Patentanspruches 1.

Bei gattungsgemäßen Betätigungsvorrichtungen können bedingt durch Lagerspiele und Gelenkspiele und angeregt durch betriebsbedingte Schwingungen der Brennkraftmaschine und durch Abgaspulsationen Geräusche auftreten, die insbesondere bei beginnender Abregelung des verdichterseitigen Ladedruckes bzw. bei einsetzendem Abheben der Abgasklappe von ihrem Ventilsitz in der Abgasleitung oder auch bei offener Abgasklappe zu beobachten sind. Die Geräusche können u.a. durch hochfrequentes Anschlagen der Abgasklappe an ihren Ventilsitz oder durch Resonanzschwingungen in der Betätigungsvorrichtung verursacht sein.

Aus der FR 2 823 795 A1 ist eine Betätigungsvorrichtung für eine Abgasklappe einer Ladedrucksteuerung von turboaufgeladenen Brennkraftmaschinen bekannt, bei der die Abgasklappe in einer Abgasleitung schwenkbar angeordnet ist und den Öffnungsquerschnitt einer die Turbine umgehenden Bypassleitung abhängig vom verdichterseitigen Ladedruck steuert. Die Abgasklappe ist an einem Stellarm angeordnet, der auf einer in der Abgasleitung drehbar gelagerten Welle befestigt ist. Die Welle ist außerhalb der Abgasleitung über einen Stellhebel und eine daran angelenkte Regelsteuerung mittels eines pneumatischen Stellglieds verstellbar. In den Kraftfluss zwischen Welle und Regelstange ist ein Drehring eingeschaltet, mittels dem Schwingungen des Motors und des Turboladers gedämpft werden können und ein Toleranzausgleich, insbesondere mit Bezug auf Winkelstellungen möglich ist.

Weiter ist aus der EP 1 256 703 A2 eine Stellanordnung für eine Turbolader-Drucksteuerungsventil-Anordnung bekannt, wobei die Stellanordnung ein Stellglied umfasst, das mit einem Stellstab gekoppelt ist, der sich bei der Verwendung in einer im Wesentlichen geraden Linie zwischen dem Stellglied und der Ventilanordnung erstreckt und mit der Ventilanordnung gekoppelt ist, um deren Position zu steuern. Der Stellstab soll ein längliches Element umfassen, der wenigstens bereichsweise flexibel ausgebildet ist, um einen entsprechenden Toleranzausgleich herstellen zu können und gegebenenfalls Schwingungen zu dämpfen.

Aufgabe der Erfindung ist es, mit baulich und fertigungstechnisch einfachen Mitteln einer Geräuschentwicklung und/oder einem damit verbundenen Verschleiß in der Betätigungsvorrichtung entgegenzuwirken.

Diese Aufgabe wird erfindungsgemäß mit den Merkmalen des Patentanspruches 1 gelöst. Vorteilhafte Weiterbildungen der Erfindung sind in den weiteren Patentansprüchen angeführt.

Erfindungsgemäß wird vorgeschlagen, dass in den Kraftfluss zwischen der Welle und der Regelstange der Betätigungsvorrichtung ein Reibungsdämpfer eingeschaltet ist. Erfindungsgemäß wird weiter vorgeschlagen, dass der Reibungsdämpfer an der Gelenkstelle zwischen dem Stellhebel und der Regelstange angeordnet und durch eine Feder gebildet ist, die die Regelstange und den Stellhebel im Gelenkbereich beaufschlagt beziehungsweise gegeneinander vorspannt. Durch den Reibungsdämpfer gelingt es, ohne jegliche Beeinträchtigung der Ladedrucksteuerung oder-regelung die die Geräusche verursachenden, hochfrequenten Schwingungen an der Abgasklappe wirkungsvoll zu eliminieren und damit verbundenem Verschleiß zu minimieren. Weiter wirkt damit in baulich besonders einfacher Weise das Gelenk unmittelbar als Reibungsdämpfer zum Abbau auftretender Schwingungen.

Die Gelenkstelle kann als einfaches Schwenkgelenk ausgebildet einen Lagerbolzen aufweisen, auf dem die Regelstange und/oder der Stellhebel gelagert sind, wobei die Feder an dem Lagerbolzen entsprechend justiert oder gehalten ist. Die Feder kann eine Schraubendruckfeder oder bevorzugt eine Tellerfeder sein, die einseitig oder beidseitig auf den Lagerbolzen aufgeschoben und fixiert eine entsprechende Vorspannung im Gelenk erzeugen.

Alternativ dazu wird vorgeschlagen, dass die Feder durch eine U-förmige Schenkelfeder oder Blattfeder gebildet ist, deren Schenkel einerseits die Regelstange und andererseits den Stellhebel beaufschlagen bzw. gegeneinander vorspannen. Eine derartige Feder benötigt nahezu keinen zusätzlichen Bauraum und ist einfach zu adaptieren.

Besonders montagegünstig kann die Feder über ein einseitig offenes Langloch an zumindest einem Schenkel auf den Lagerbolzen lediglich quer zur Gelenkachse aufgesteckt und in Abziehrichtung formschlüssig gehalten sein. Dabei kann einer der aufgesteckten Schenkel der Feder einen an den Lagerbolzen angeformten Kopf hintergreifen und somit zuverlässig gegen unbeabsichtigtes Ablösen gesichert sein.

Alternativ kann die Feder an zumindest einem Schenkel über eine eingearbeitete Ausnehmung auf den Lagerbolzen in Richtung der Gelenkachse aufgeschoben und mittels zumindest eines am Lagerbolzen befestigten Sicherungsringes gehalten sein. Der Sicherungsring stellt in jedem Falle (sogar bei einem Versagen der Schenkelfeder) sicher, dass die Gelenkverbindung erhalten bleibt.

Des Weiteren kann zwischen der Regelstange und dem Stellhebel zumindest eine auf den Lagerbolzen aufgesteckte Reibscheibe vorgesehen sein, mittels der die schwingungsdämpfende Funktion der Gelenkverbindung weiter beeinflussbar ist. Die zumindest eine Reibscheibe kann dabei aus einem geeigneten, entsprechende Reibwerte aufweisenden Material, zum Beispiel einem Kunststoff, gefertigt sein.

In vorteilhafter Weiterbildung der Erfindung kann die Schenkelfeder in einer definierten Position unverschwenkbar an der Gelenkverbindung gehalten sein, um zum Beispiel bei beengten Bauraumverhältnissen den Freigang der Gelenkverbindung als auch eine definierte Dämpfungsfunktion sicherzustellen.

Zur Verschwenksicherung kann in konstruktiv einfacher Weise der halbkreisförmige Basisabschnitt der Schenkelfeder mit einer schlitzförmigen Ausnehmung versehen sein, die die Regelstange umschließt. Dies setzt voraus, dass die Schenkelfeder bei der Montage zunächst auf die Regelstange aufgeschoben und anschließend die Gelenkverbindung hergestellt wird. Alternativ oder zusätzlich kann zumindest ein Schenkel der Schenkelfeder zwei randseitige Abkantungen aufweist, die den abgeflachten Abschnitt der Regelstange oder den Stellhebel beidseitig umfassen.

Schließlich kann zur Vereinfachung der Montage der Gelenkverbindung der Lagerbolzen der Gelenkverbindung einerseits mittels einer Nietverbindung an der Regelstange oder an dem Stellhebel befestigt sein und mit einem im Durchmesser größeren Abschnitt in eine Lagerbohrung des Stellhebels oder der Regelstange eingesteckt und mittels des Sicherungsringes gehalten sein.

Mehrere Ausführungsbeispiele der Erfindung sind im Folgenden mit weiteren Einzelheiten näher erläutert. Die schematische Zeichnung zeigt in:
- Fig. 1: eine dem Stand der Technik entsprechende Betätigungsvorrichtung für eine Abgasklappe einer Ladedrucksteuerung einer turboaufgeladenen Brennkraftmaschine für Kraftfahrzeuge, mit einer Regelstange und einem Stellhebel, der über eine Welle auf eine schwenkbar angeordnete Abgasklappe innerhalb des Gehäuses einer Turbine eines Abgasturboladers wirkt;
- Fig. 2a: die erfindungsgemäße Betätigungsvorrichtung als Einzelheit mit der teilweise dargestellten Regelstange und einem Stellhebel, der mit der die Abgasklappe tragenden Welle fest verbunden ist, wobei die Gelenkverbindung zwischen der Regelstange und dem Stellhebel mittels einer Schenkelfeder als Schwingungsdämpfer ausgeführt ist;
- Fig. 2b: die Schenkelfeder einer ersten Ausführungsform (Fig. 3a) in perspektivischer Alleindarstellung;
- Fig. 2c: die Schenkelfeder einer zweiten Ausführungsform (Fig. 3b) in perspektivischer Alleindarstellung;
- Fig. 2d: eine beispielhafte Darstellung eines Sicherungsringes;
- Fig. 3a: die Gelenkverbindung zwischen der Regelstange und dem Stellhebel in einem Schnitt entlang Linie III - III der Fig. 2a mit einer quer zur Gelenkachse aufgesteckten Schenkelfeder;
- Fig. 3b: eine alternative Gelenkverbindung zwischen der Regelstange und dem Stellhebel in einem Schnitt entlang Linie III - III der Fig. 2a mit einem die Gelenkverbindung und die Schenkelfeder haltenden Sicherungsring;
- Fig. 4a: eine weitere, alternative Gelenkverbindung zwischen der Regelstange und dem Stellhebel in einem Schnitt gemäß Linie III - III der Fig. 2a mit einem durch eine Nietverbindung befestigten Lagerbolzen;
- Fig. 4b: die Schenkelfeder der Gelenkverbindung nach Fig. 4a in perspektivischer Alleindarstellung;
- Fig. 5: eine weitere, alternative Gelenkverbindung mit einer an der Regelstange gegen Verschwenken gesicherten Schenkelfeder; und
- Fig. 6: eine weitere alternative Gelenkverbindung mit einer zwischen der Regelstange und dem Stellhebel angeordneten Tellerfeder, wiederum im Schnitt gemäß Linie III - III der Fig. 2a.

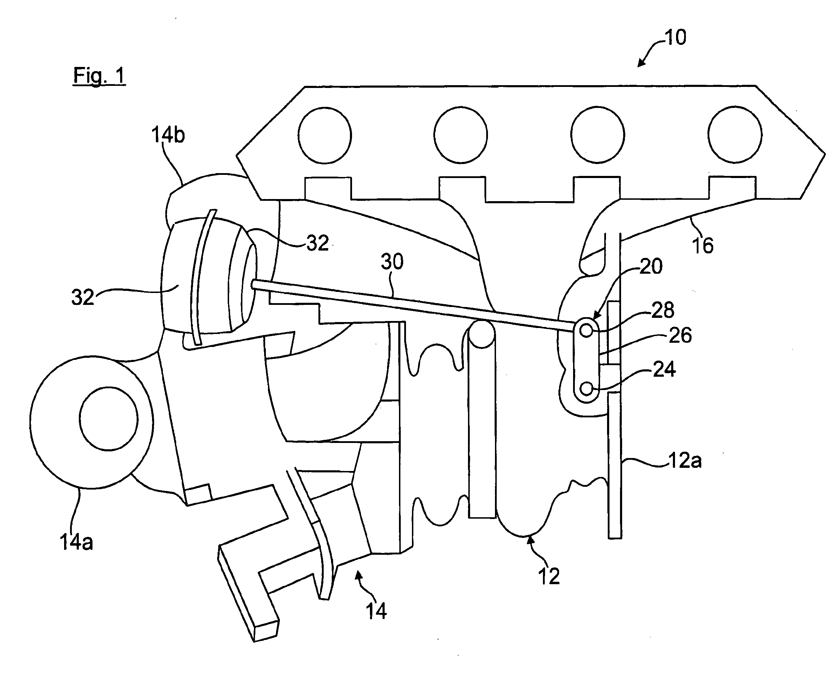

In der Fig. 1 ist eine dem Stand der Technik entsprechende Abgasturbolader-Anordnung 10 für aufgeladene Brennkraftmaschinen in Kraftfahrzeugen dargestellt, die jedoch nur soweit beschrieben ist, als dies für das Verständnis der vorliegenden Erfindung erforderlich ist.

Die Anordnung 10 weist eine in einem Gehäuse 12 drehbar gelagerte Abgasturbine (nicht ersichtlich) auf, die in bekannter Weise das Laufrad eines Verdichters 14 antreibt. Der Verdichter 14 saugt über die Leitungsanschlüsse 14a, 14b Verbrennungsluft an und fördert sie mit definiertem Ladedruck über eine nicht dargestellte Ladedruckleitung zu den Brennräumen der Brennkraftmaschine.

Das die Abgasturbine beaufschlagende Abgas der Brennkraftmaschine wird über einen an das Gehäuse 12 angeschlossenen Abgaskrümmer 16 zugeführt und strömt anschließend über einen zentralen Abströmflansch 12a in das weiterführende Abgassystem der Brennkraftmaschine ab.

Innerhalb des Gehäuses 12 ist in an sich bekannter Weise eine Bypassleitung integriert, mittels der zur Regelung des verdichterseitigen Ladedruckes Abgas stromauf der Turbine direkt in den Abströmflansch 12a ableitbar ist.

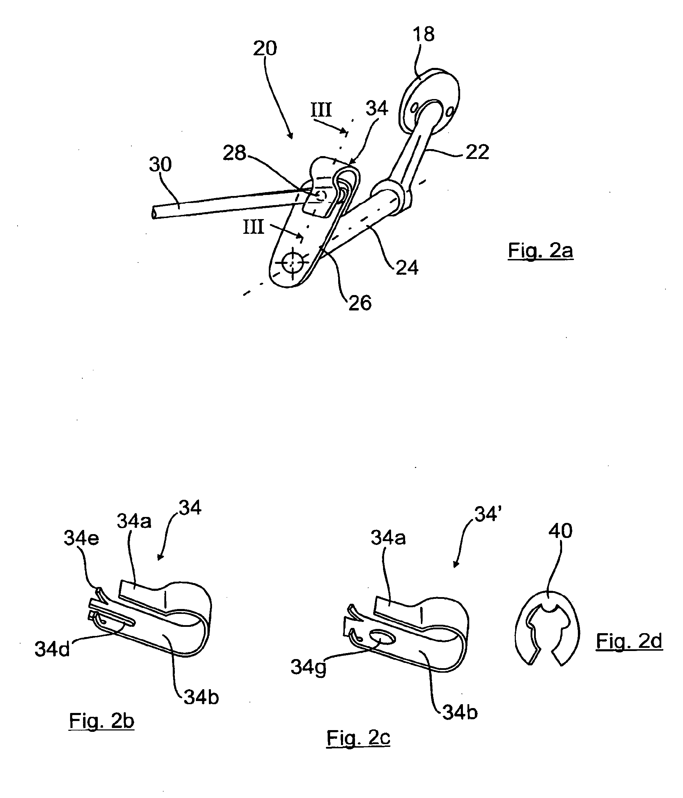

Dazu ist in dem Gehäuse 12 eine Abgasklappe 18 (vgl. Fig. 2a) einer allgemein mit 20 bezeichneten Betätigungsvorrichtung vorgesehen, die an einem Stellarm 22 befestigt ist und die in nicht dargestellter Weise mit einem den Öffnungsquerschnitt der Bypassleitung bestimmenden, im Gehäuse 12 integrierten Ventilsitz zusammenwirkt. Die Abgasklappe 18 kann entweder am Ventilsitz anliegend diesen verschließen oder beim Abregelvorgang zunehmend von diesem abheben und dementsprechend den Durchströmquerschnitt der Bypassleitung zunehmend öffnen.

Die Betätigungsvorrichtung 20 weist eine im Gehäuse 12 drehbar gelagerte und nach außen geführte Welle 24 auf, an der innerhalb des Gehäuses 12 die Abgasklappe 18 über den Stellarm 22 und außerhalb des Gehäuses 12 ein Stellhebel 26 befestigt ist. Die Befestigung des Stellarmes 22 kann zum Beispiel durch eine Schweißverbindung und die Befestigung des Stellhebels 26 durch eine Steck- Schraubverbindung hergestellt sein.

An dem Stellhebel 26 (vgl. auch Fig. 1) greift über eine Gelenkverbindung mit einem Gelenkbolzen 28 eine im Gelenkbereich bevorzugt abgeflachte Regelstange 30 an, die mittels eines hier zum Beispiel pneumatischen Stellmotors 32 als Aktuator linear verstellbar ist und somit die Abgasklappe 18 zur Steuerung des Ladedruckes der Brennkraftmaschine entsprechend verschwenkt.

Die Gelenkverbindung zwischen der Regelstange 30 und dem Stellhebel 26 ist zugleich als Reibungsdämpfer zur Absorption hochfrequenter Schwingungen an der Abgasklappe 18 ausgebildet.

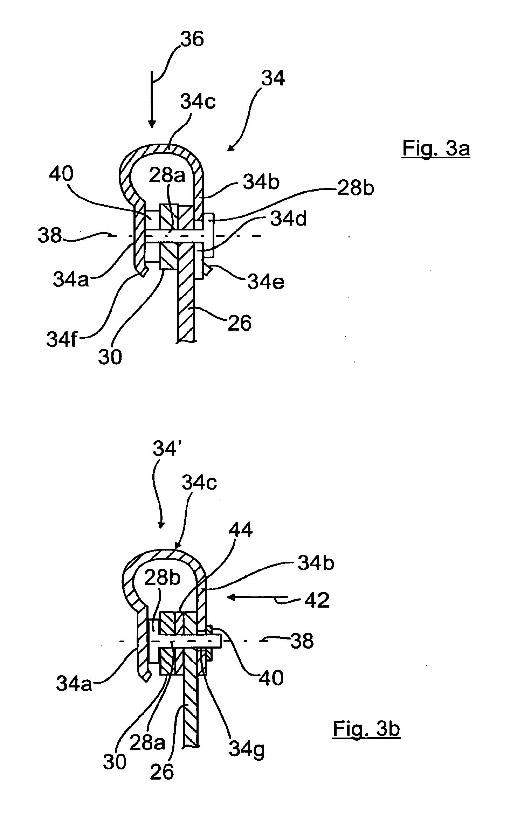

Dazu ist an der besagten Gelenkverbindung mit dem Lagerbolzen 28 eine U-förmige Schenkelfeder 34 (Fig. 2a und 2b) aus einem zum Beispiel Blattfederstahl angeordnet, die mit ihren an den halbkreisförmigen Basisabschnitt 34c anschließenden Schenkeln 34a, 34b (vgl. Fig. 3a) den abgeflachten Abschnitt der Regelstange 30 und den korrespondierenden Abschnitt des Stellhebels 26 gegeneinander derart vorspannt, dass diese als Reibungsdämpfer bzw. Schwingungsdämpfer wirken.

Die konstruktive Ausführung ist dabei so, dass durch diese Vorspannung Gelenkspiele eliminiert und Schwingungen an der Abgasklappe gedämpft werden, ohne dass jedoch eine unzulässige Schwergängigkeit der Gelenkverbindung auftritt. Die Reibungsdämpfung kann durch entsprechende Oberflächenbearbeitungen der aneinander anliegenden Kontaktflächen gezielt beeinflusst werden.

Die Schenkelfeder 34 ist in Richtung des Pfeils 36 bzw. quer zur Gelenkachse 38 der Gelenkverbindung auf den Lagerbolzen 28 aufgesteckt. Dazu weist der eine Schenkel 34b der Schenkelfeder 34 ein in Aufsteckrichtung offenes Langloch 34d auf (siehe auch Fig. 2b), über das der Schenkel 34b auf den Schaft 28a des Lagerbolzens 28 bevorzugt form- und reibschlüssig aufschiebbar ist, wobei zudem eine zur Aufsteckrichtung schräge Abkantung 34e des Schenkels 34b den Kopf 28b des Lagerbolzens 28 formschlüssig hintergreift und damit die Schenkelfeder 34 gegen ein unbeabsichtigtes Lösen entgegen der Aufsteckrichtung 36 sichert.

Der andere Schenkel 34a der Schenkelfeder 34 ist ohne Langloch ausgeführt und übergreift in der montierten Position den Lagerbolzen 28, der z.B. mittels eines aufgesteckten Sicherungsringes 40 die Gelenkverbindung zusammenhält. Der Schenkel 34a wirkt somit mit seiner Vorspannung über den Lagerbolzen 28 und den Sicherungsring 40 quasi mittelbar auf die Gelenkstange 30. Eine zusätzliche, schräge Abkantung 34f am Schenkel 34a wirkt als zusätzliche Sicherung gegen unbeabsichtigtes Ablösen der Schenkelfeder 34.

Die Fig. 3b zeigt eine alternative Ausführung der Schenkelfeder 34', die nur soweit beschrieben ist, als sie sich von der Ausführung gemäß Fig. 3a wesentlich unterscheidet. Funktionell gleiche Teile sind mit gleichen Bezugszeichen versehen.

Gemäß der Ausführung Fig. 3b ist der eine Schenkel 34b der Schenkelfeder 34' (siehe auch Fig. 2c) mit einer Ausnehmung bzw. Bohrung 34g versehen und über diese auf dem in umgekehrter Anordnung montierten Lagerbolzen 28 positioniert und anschließend mittels des aufgesprengten Sicherungsringes 40 gehalten.

Des Weiteren ist hier beispielhaft zwischen dem abgeflachten Abschnitt der Regelstange 30 und dem korrespondierenden Abschnitt des Stellhebels 26 eine Reibscheibe 44 aus einem reibungserhöhendem Werkstoff bzw. aus Kunststoff eingefügt, die die schwingungsdämpfende Wirkung der beschriebenen Gelenkverbindung weiter erhöht.

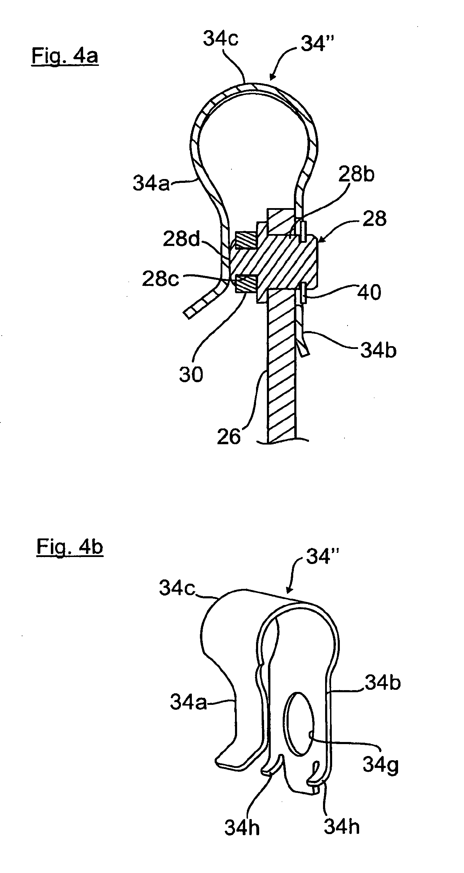

Die Fig. 4a und 4b zeigen eine weitere, alternative Ausführung der Gelenkverbindung zwischen der Regelstange 30 und dem Stellhebel 26, die jedoch nur soweit beschrieben ist, als sie sich wesentlich von den vorstehenden Ausführungen unterscheidet. Funktionell gleiche Teile sind mit gleichen Bezugszeichen versehen.

Gemäß der Fig. 4a ist der Lagerbolzen 28 mit einem im Durchmesser geringeren Abschnitt 28c durch den abgeflachten Abschnitt der Regelstange 30 gesteckt und durch Anformen eines Nietkopfes 28d mit der Regelstange 30 in einer Nietverbindung befestigt.

Der im Durchmesser größere Schaft 28b ist in die korrespondierende Lagerbohrung des Stellhebels 26 eingeschoben und mittels des aufgesteckten Sicherungsringes 40 gehalten.

Die in dem Schenkel 34b der Schenkelfeder 34" vorgesehene Ausnehmung 34g (vgl. auch Fig. 4b) ist hier größer als der Außendurchmesser des Sicherungsringes 40. Dies hat den Vorteil, dass vor der Montage der Schenkelfeder 34 die Regelstange 30 mit dem Lagerbolzen 28 am Stellhebel 26 montierbar und der Sicherungsring 40 aufsteckbar ist. Nach dem Aufstecken der Schenkelfeder 34 ist diese jedoch an dem Sicherungsring 40 justiert bzw. gegen Ablösen gehalten.

An der Schenkelfeder 34" bzw. an deren Schenkel 34b sind ferner an beiden Randbereichen (Fig. 4b) nach innen dem anderen Schenkel 34a zu ragende Abkantungen 34h angebracht, die in der Montagestellung (in Fig. 4a nicht ersichtlich) die Seitenflächen des Stellhebels 26 umfassen und somit als Verschwenksicherung dienen. Die Schenkelfeder 34 bleibt demzufolge in der in der Fig. 4a dargestellten, aufrechten Position zum Stellhebel 26.

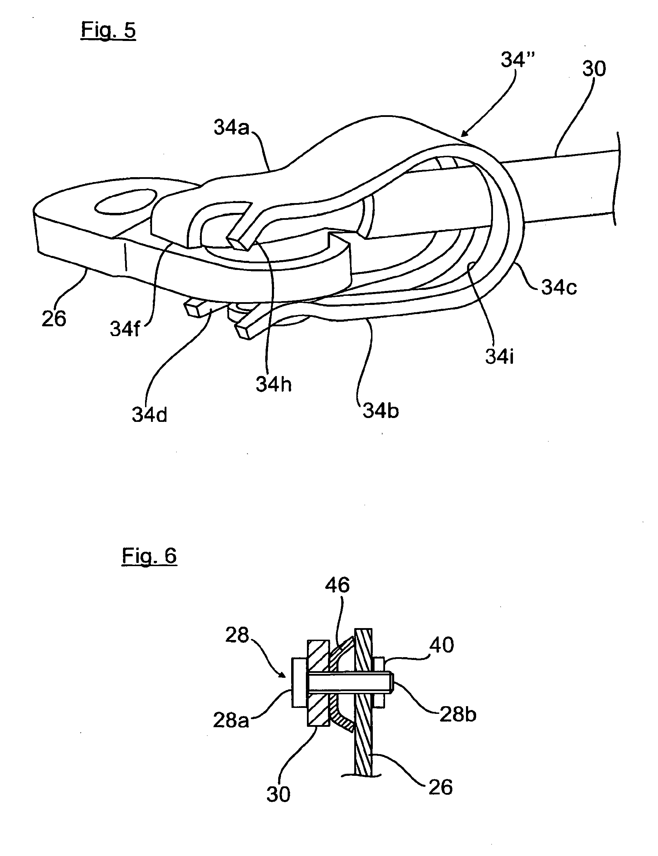

Die Fig. 5 zeigt eine weitere Ausführungsform der Gelenkverbindung, bei der die Schenkelfeder 34"' an ihrem etwa halbkreisförmigen Basisabschnitt mit einer schlitzförmigen Ausnehmung 34i versehen ist, die als Verschwenksicherung für die Schenkelfeder 34 dient.

Die Ausnehmung 34i weist dabei eine Schlitzbreite auf, die etwa dem Durchmesser der Regelstange 30 entspricht.

Zur Montage der Gelenkverbindung wird die Schenkelfeder 34"' zunächst mit ihrer schlitzförmigen Ausnehmung 34i auf die Regelstange 30 aufgeschoben. Sodann wird die Regelstange 30 über den Lagerbolzen 28 mit dem Stellhebel 26 verbunden und anschließend in Längsrichtung der Regelstange 30 auf die Gelenkverbindung aufgeschoben, wobei die seitlichen Flanken des Langloches 34d in eine in dem Schaft 28b des Schraubenbolzens 28 eingearbeitete Ringnut (nicht ersichtlich) eingreifen. Eine weitere, nach innen ragende Abkantung 34f (wie in Fig. 3a) sichert die Schenkelfeder 34'" gegen Ablösen.

Die Fig. 6 schließlich zeigt eine weiter modifizierte Gelenkverbindung zwischen der Regelstange 30 und dem Stellhebel 26, bei der auf dem Lagerbolzen 28 und zwischen der Regelstange 30 und dem Stellhebel 26 eine Tellerfeder 46 angeordnet ist, die über den Sicherungsring 40 federnd vorgespannt ist und somit ebenfalls als Reibungsdämpfer wirkt.

Die Erfindung ist nicht auf die beschriebenen Ausführungsbeispiele beschränkt. So kann ein Reibungsdämpfer zusätzlich oder alternativ auch in der Lagerung der die Abgasklappe 18 tragenden Welle 24 vorgesehen und mittels vorspannender Federn und/oder Reibscheiben ausgeführt sein.

Die beschriebene Abgasklappe 18 könnte in an sich bekannter Weise auch außerhalb der Abgasturbine in einer stromauf liegenden Abgasleitung mit einer abzweigenden Bypassleitung angeordnet sein.

## Patentansprüche

1. Betätigungsvorrichtung für eine Abgasklappe einer Ladedrucksteuerung von turboaufgeladenen Brennkraftmaschinen, bei der die Abgasklappe in einer Abgasleitung, insbesondere im Gehäuse einer Turbine eines Abgasturboladers, schwenkbar angeordnet ist und den Öffnungsquerschnitt einer die Turbine umgehenden Bypassleitung abhängig vom verdichterseitigen Ladedruck steuert, wobei die Abgasklappe (18) an einem Stellarm (22) angeordnet ist, der auf einer in der Abgasleitung drehbar gelagerten Welle (24) befestigt ist, welche Welle (24) außerhalb der Abgasleitung über einen Stellhebel (26) und eine daran angelenkte Regelstange (30) und einen linearen Stellmotor (32) verstellbar ist, wobei in den Kraftfluss zwischen der Welle (24) und der Regelstange (30) ein Reibungsdämpfer (34, 46) zur Systembedämpfung im Bereich der Abgasklappe (18) eingeschaltet ist, und wobei der Reibungsdämpfer (34, 46) an der Gelenkverbindung zwischen dem Stellhebel (26) und der Regelstange (30) angeordnet ist, **dadurch gekennzeichnet, dass** der Reibungsdämpfer durch eine Feder (34, 46) gebildet ist, die die Regelstange (30) und den Stellhebel (26) im Gelenkbereich beaufschlagt.

2. Betätigungsvorrichtung nach Anspruch 1, **dadurch gekennzeichnet, dass** die Gelenkverbindung einen Lagerbolzen (28) aufweist, auf dem die Regelstange (30) und/oder der Stellhebel (26) gelagert sind und dass die Feder (34, 46) mit dem Lagerbolzen (28) zusammenwirkt.

3. Betätigungsvorrichtung nach einem der vorhergehenden Ansprüche, **dadurch gekennzeichnet, dass** die Feder durch eine U-förmige Schenkelfeder (34) gebildet ist, deren Schenkel (34a, 34b) einerseits die Regelstange (30) und andererseits den Stellhebel (26) beaufschlagen.

4. Betätigungsvorrichtung nach Anspruch 3, **dadurch gekennzeichnet, dass** die Feder (34) über ein einseitig offenes Langloch (34d) an zumindest einem Schenkel (34b) auf den Lagerbolzen (28) lediglich quer zur Gelenkachse (38) aufgesteckt und in Abziehrichtung formschlüssig gehalten ist.

5. Betätigungsvorrichtung nach Anspruch 3, **dadurch gekennzeichnet, dass** die Feder (34) an zumindest einem Schenkel (34b) über eine eingearbeitete Ausnehmung (34g) auf dem Lagerbolzen (28) positioniert und mittels zumindest eines am Lagerbolzen (28) befestigten Sicherungsringes (40) justiert und/oder gehalten ist.

6. Betätigungsvorrichtung nach einem der Ansprüche 3 bis 5, **dadurch gekennzeichnet, dass** die Schenkelfeder (34) in einer definierten Position unverschwenkbar an der Gelenkverbindung gehalten ist.

7. Betätigungsvorrichtung nach Anspruch 6, **dadurch gekennzeichnet, dass** der halbkreisförmige Basisabschnitt (34c) der Schenkelfeder (34) mit einer schlitzförmigen Ausnehmung (34i) die Regelstange (30) umschließt.

8. Betätigungsvorrichtung nach Anspruch 6, **dadurch gekennzeichnet, dass** zumindest ein Schenkel (34b) der Schenkelfeder (34) zwei randseitige Abkantungen (34h) aufweist, die den abgeflachten Abschnitt der Regelstange (30) oder den Stellhebel (26) beidseitig umfassen.

9. Betätigungsvorrichtung nach Anspruch 1 oder 2, **dadurch gekennzeichnet, dass** die Feder durch zumindest eine über den Sicherungsring (40) vorgespannte Tellerfeder (46) gebildet ist.

10. Betätigungsvorrichtung nach einem der vorhergehenden Ansprüche, **dadurch gekennzeichnet, dass** zwischen der Regelstange (30) und dem Stellhebel (26) zumindest eine auf den Lagerbolzen (28) aufgesteckte Reibscheibe (44) eingefügt ist.

11. Betätigungsvorrichtung nach einem der vorhergehenden Ansprüche, **dadurch gekennzeichnet, dass** der Lagerbolzen (28) der Gelenkverbindung einerseits mittels einer Nietverbindung (28d) an der Regelstange (30) oder an dem Stellhebel (26) befestigt ist und mit einem im Durchmesser größeren Schaft (28b) in eine Lagerbohrung des Stellhebels (26) oder der Regelstange (30) eingesteckt und mittels des Sicherungsringes (40) gehalten ist.

## Claims

1. Actuating device for an exhaust gas valve of a supercharging pressure control of a turbocharged internal combustion engine, wherein the exhaust gas valve is pivotally arranged in an exhaust pipe, particularly in the housing of a turbine of an exhaust gas supercharger, and controls the opening cross section of a bypass line circumventing the turbine, in dependence on the compressor-side supercharging pressure, the exhaust gas valve (18) being mounted on an actuator arm (22) which is attached to a shaft (24) rotatably mounted in the exhaust pipe, said shaft (24) being adjustable from outside the exhaust pipe by means of an adjustment lever (26) and a control rod (30) jointed thereto and a linear actuator (32), a friction damper (34, 46) for damping the system in the region of the exhaust gas valve (18) being interposed in the force flow between the shaft (24) and the control rod (30), and wherein the friction damper (34, 46) is arranged on the joint connection between the adjustment lever (26) and the control rod (30), **characterised in that** the friction damper is formed by a spring (34, 46) which acts on the control rod (30) and the adjustment lever (26) in the region of the joint.

2. Actuating device according to claim 1, **characterised in that** the joint connection comprises a bearing pin (28) on which the control rod (30) and/or the adjustment lever (26) are mounted and **in that** the spring (34, 46) interacts with the bearing pin (28).

3. Actuating device according to one of the preceding claims, **characterised in that** the spring is formed by a U-shaped leg spring (34), the legs (34a, 34b) of which act on the control rod (30), on the one hand, and on the adjustment lever (26), on the other hand.

4. Actuating device according to claim 3, **characterised in that** the spring (34) is fitted onto the bearing pin (28), via an oblong hole (34d) open on one side, at at least one leg (34b), solely at right-angles to the joint axis (38) and is held in interlocking engagement in the pull-off direction.

5. Actuating device according to claim 3, **characterised in that** the spring (34) is positioned on the bearing pin (28) at at least one leg (34b) by means of an incorporated recess (34g) and is adjusted and/or held by means of at least one retaining ring (40) attached to the bearing pin (28).

6. Actuating device according to one of claims 3 to 5, **characterised in that** the leg spring (34) is held non-pivotally in a defined position on the joint connection.

7. Actuating device according to claim 6, **characterised in that** the semicircular base portion (34c) of the leg spring (34) embraces the control rod (30) with a slot-like recess (34i).

8. Actuating device according to claim 6, **characterised in that** at least one leg (34b) of the leg spring (34) comprises two edge bevels (34h) which embrace the flattened portion of the control rod (30) or the adjustment lever (26) on both sides.

9. Actuating device according to claim 1 or 2, **characterised in that** the spring is formed by at least one disc spring (46) which is held under tension by the retaining ring (40).

10. Actuating device according to one of the preceding claims, **characterised in that** at least one friction disc (44) fitted onto the bearing pin (28) is inserted between the control rod (30) and the adjustment lever (26).

11. Actuating device according to one of the preceding claims, **characterised in that** the bearing pin (28) of the joint connection is on the one hand attached by a rivet connection (28d) to the control rod (30) or to the adjustment lever (26) and is inserted, by means of a shaft (28b) which is larger in diameter, into a bearing bore of the adjustment lever (26) or of the control rod (30) and is held by the retaining ring (40).

## Revendications

1. Dispositif d'actionnement pour un clapet de gaz d'échappement d'une commande de pression d'admission de moteurs à combustion interne suralimentés, pour lequel le clapet de gaz d'échappement est agencé de manière pivotante dans une conduite de gaz d'échappement, en particulier dans le boîtier d'une turbine d'une turbosoufflante à gaz d'échappement et commande la section transversale d'ouverture d'une conduite de dérivation contournant la turbine en fonction de la pression d'admission côté compresseur, le clapet de gaz d'échappement (18) étant agencé sur un bras de réglage (22) qui est fixé sur un arbre (24) logé de manière à pouvoir tourner dans la conduite de gaz d'échappement, lequel arbre (24) peut être déplacé en dehors de la conduite de gaz d'échappement par un levier de réglage (26) et une tige de régulation (30) articulée à celui-ci et un moteur de commande linéaire (32), un amortisseur à friction (34, 46) étant monté dans le flux de force entre l'arbre (24) et la tige de régulation (30) pour l'amortissement du système dans la zone du clapet de gaz d'échappement (18), et l'amortisseur à friction (34, 46) étant agencé sur la liaison articulée entre le levier de réglage (26) et la tige de régulation (30), **caractérisé en ce que** l'amortisseur à friction est formé par un ressort (34, 46) qui sollicite la tige de régulation (30) et le levier de réglage (26) dans la zone articulée.

2. Dispositif d'actionnement selon la revendication 1, **caractérisé en ce que** la liaison articulée présente un boulon d'appui (28), sur lequel la tige de régulation (30) et/ou le levier de réglage (26) est logé et **en ce que** le ressort (34, 46) agit avec le boulon d'appui (28).

3. Dispositif d'actionnement selon l'une quelconque des revendications précédentes, **caractérisé en ce que** le ressort est formé par un ressort à branches (34) en U, dont les branches (34a, 34b) sollicitent d'une part la tige de régulation (30) et d'autre part le levier de réglage (26).

4. Dispositif d'actionnement selon la revendication 3, **caractérisé en ce que** le ressort (34) est monté par le biais d'un trou oblong (34d) ouvert d'un côté sur au moins une branche (34b) sur le boulon d'appui (28) uniquement transversalement à l'axe d'articulation (38) et est maintenu par complémentarité de formes dans le sens d'extraction.

5. Dispositif d'actionnement selon la revendication 3, **caractérisé en ce que** le ressort (34) est positionné sur au moins une branche (34b) au-dessus d'un évidement inséré (34g) sur le boulon d'appui (28) et est ajusté et/ou maintenu à l'aide d'au moins un circlip (40) fixé sur le boulon d'appui (28).

6. Dispositif d'actionnement selon l'une quelconque des revendications 3 à 5, **caractérisé en ce que** le ressort à branches (34) est maintenu de manière non pivotante dans une position définie sur la liaison articulée.

7. Dispositif d'actionnement selon la revendication 6, **caractérisé en ce que** la section de base semi-circulaire (34c) du ressort à branches (34) entoure avec un évidement en forme de fente (34i) la tige de régulation (30).

8. Dispositif d'actionnement selon la revendication 6, **caractérisé en ce qu'**au moins une branche (34b) du ressort à branches (34) présente deux biseaux (34h) côté bord qui comportent de part et d'autre la section aplatie de la tige de régulation (30) ou le levier de réglage (26).

9. Dispositif d'actionnement selon la revendication 1 ou 2, **caractérisé en ce que** le ressort est formé par au moins une rondelle-ressort (46) précontrainte par le circlip (40).

10. Dispositif d'actionnement selon l'une quelconque des revendications précédentes, **caractérisé en ce qu'**au moins un disque de friction (44) monté sur le boulon d'appui (28) est inséré entre la tige de régulation (30) et le levier de réglage (26).

11. Dispositif d'actionnement selon l'une quelconque des revendications précédentes, **caractérisé en ce que** le boulon d'appui (28) de la liaison articulée est fixé d'un côté à l'aide d'un rivetage (28d) sur la tige de régulation (30) ou sur le levier de réglage (26) et est inséré avec une tige (28b) de plus grand diamètre dans un perçage de palier du levier de réglage (26) ou de la tige de régulation (30) et est maintenu à l'aide d'un circlip (40).
